# EUROPEAN PATENT APPLICATION

(11) **EP 2 104 254 A1**
(43) Date of publication of application: **23.09.2009**
(21) Application number: 07859796.0
(22) Date of filing: 12.12.2007
(51) Int. Cl.: H04J 11/00, H04B 7/26, H04J 1/00

(54) **BASE STATION DEVICE AND COMMUNICATION CONTROL METHOD**

(30) Priority: 09.01.2007 JP 2007001860
(71) Applicant: NTT DoCoMo, Inc., Chiyoda-ku Tokyo 100-6150 (JP)
(72) Inventor: ISHII, Hiroyuki, Tokyo 100-6150 (JP); ISHII, Minami, Tokyo 100-6150 (JP); HIGUCHI, Kenichi, Tokyo 100-6150 (JP)
(74) Representative: HOFFMANN EITLE
(86) International application number: PCT/JP2007/073978
(87) International publication number: WO 2008/084622

(57) **Abstract**

An out-of-synchronization determining section that determines uplink out of synchronization with the mobile station in accordance with a reception timing of the uplink signal is provided in a base station apparatus for carrying out communications with a mobile station, wherein the mobile station transmits an uplink signal by Single-Carrier Frequency Division Multiple Access or Orthogonal Frequency Division Multiple Access.

## Description

### TECHNICAL FIELD

The present invention relates to a Long Term Evolution (LTE) system, and specifically to a base station apparatus and a communications control method.

### BACKGROUND ART

A communications method as a successor of W-CDMA and HSDPA, namely, Long Term Evolution (LTE) has been considered by a W-CDMA standardization organization 3GPP. As a radio access method, Orthogonal Frequency Division Multiplexing (OFDM) is under consideration for downlink, and Single-Carrier Frequency Division Multiple Access (SC-FDMA) is under consideration for uplink (see Non-patent Publication1, for example).

In OFDM, a frequency band is divided into plural narrow frequency bands (sub-carriers), and data are placed on the respective divided frequency bands to carry out transmission. The sub-carriers are densely arranged in a frequency direction, allowing the sub-carriers to be partly overlapped without causing interference, thereby realizing high speed transmission and improving frequency usage efficiency.

In SC-FDMA, a frequency band is divided into plural narrow bands, and different narrow bands are used by different terminal devices, so that interference between the user terminals can be reduced. According to SC-FDMA, which is **characterized in that** variations in the transmission electric power are reduced, a large coverage area and low energy consumption can be realized.

In W-CDMA, the following two are defined as uplink out of synchronization (see Non-patent Publication 2, for example).
- Dedicated Physical Control Channel (DPCCH) reception quality
- Cyclic Redundancy Check (CRC) check result,
where DPCCH quality corresponds to signal-to-interference power ratio (SIR) of pilot symbols, and CRC check result corresponds to a block error rate.

Non-patent Publication 1: 3GPP TR 25.814 (V7.0.0), "Physical Layer Aspects for Evolved UTRA," June 2006

Non-patent Publication 2: 3GPP TS 25.214 (V7.2.0), "4.3.1.3 Uplink Synchronization primitives" Sept. 2006

### SUMMARY OF INVENTION

### PROBLEMS TO BE SOLVED BY THE INVENTION

However, the above background art has the following problems.

In an LTE system, a base station (eNodeB: eNB) controls transmission timings of each mobile station by downlink signaling so that reception timings of reception signals from plural mobile stations that access the base station at the same time are limited within a CP length in order to maintain orthogonality between the mobile stations.

However, when out of synchronization is detected only from the SIR of a known pilot symbol and a data error rate, it is expected that an uplink shared channel may be assigned to a mobile station that is outside the reception window of the base station apparatus. Therefore, when there exists the mobile station out of the reception window, an uplink transmission characteristic may be degraded because uplink orthogonality between the mobile stations is spoiled. As a result, the uplink capacity is degraded. Here, the reception window of the base station apparatus is defined by Fast Fourier Transform (FFT) timing and the CP length.

The present invention has been made in view of the above. An objective of the present invention lies in a provision of a base station and a communications control method wherein uplink orthogonality between mobile stations is maintained and uplink transmission characteristic and capacity are improved.

Another objective lies in a provision of a base station and a communications control method wherein out of synchronization can be detected and the detection result is reflected to uplink scheduling.

### MEANS FOR SOLVING THE PROBLEM

In order to accomplish the above objectives, a base station according to an embodiment of the present invention is a base station apparatus for carrying out communications with a mobile station, wherein the mobile station transmits an uplink signal by Single-Carrier Frequency Division Multiple Access or Orthogonal Frequency Division Multiple Access, the base station apparatus being characterized by an out-of-synchronization determining section that determines uplink out of synchronization with the mobile station in accordance with a reception timing of the uplink signal.

By configuring in such a manner, it can be determined in accordance with the reception timing of the uplink signal that the mobile station whose reception timing is, for example, outside a reception window of the base station apparatus is out of synchronization.

Another base station apparatus according to an embodiment of the present invention is a base station apparatus that carries out communications with plural mobile stations, wherein the mobile stations transmit an uplink signal by Single-Carrier Frequency Division Multiple Access or Orthogonal Frequency Division Multiple Access, the base station apparatus being **characterized in that** an uplink resource or a downlink resource is not assigned to a mobile station for which uplink out of synchronization is detected.

By configuring in such a manner, uplink orthogonality between mobile stations is maintained and the uplink transmission characteristic is improved because the uplink resource is not assigned to the mobile station that is determined to be out of synchronization.

Another base station apparatus according to an embodiment of the present invention is a base station apparatus that carries out communications with plural mobile stations, wherein the mobile stations transmit an uplink signal by Single-Carrier Frequency Division Multiple Access or Orthogonal Frequency Division Multiple Access, the base station apparatus being **characterized in that** communication with a mobile station for which an uplink is detected to be out of synchronization is disconnected.

By configuring in such a manner, uplink orthogonality between mobile stations is maintained and the uplink transmission characteristic is improved because communication with the mobile station that is determined to be out of synchronization is disconnected.

Another base station apparatus according to an embodiment of the present invention is a base station apparatus that carries out communications with plural mobile stations, wherein the mobile stations transmit uplink signals by Single-Carrier Frequency Division Multiple Access or Orthogonal Frequency Division Multiple Access, the base station apparatus being **characterized in that** a message for directing reestablishment of synchronization is provided, using a random access channel, to a mobile station whose uplink is detected to be out of synchronization is disconnected.

By configuring in such a manner, uplink orthogonality between mobile stations is maintained and an uplink transmission characteristic is improved because reestablishment of synchronization may be directed to the mobile station that is determined to be out of synchronization.

Another base station apparatus is a base station apparatus for carrying out communications with a mobile station, wherein the mobile station transmits an uplink signal by Single-Carrier Frequency Division Multiple Access or Orthogonal Frequency Division Multiple Access at the time of starting the communications, the base station apparatus being characterized by an out-of-synchronization determining section for determining plural synchronization states of uplink synchronization with the mobile station in accordance with a reception timing of the uplink signal, a reception quality of an uplink pilot signal, and an uplink data error rate.

Another base station apparatus according to an embodiment of the present invention is a base station apparatus for carrying out communications with a mobile station, wherein the mobile station transmits an uplink signal by Single-Carrier Frequency Division Multiple Access or Orthogonal Frequency Division Multiple Access at the time of starting the communications, the base station apparatus being characterized by a synchronization establishment determining section for determining that uplink synchronization with the mobile station is established in accordance with at least one of a reception timing of the uplink signal and a reception quality of an uplink pilot signal.

A communications control method according to an embodiment of the present invention is a communications method in a base station apparatus for carrying out communications with a mobile station, the method being characterized by steps of: receiving an uplink signal transmitted from the mobile station by Single-Carrier Frequency Division Multiple Access or Orthogonal Frequency Division Multiple Access; and determining that an uplink with the mobile station is out of synchronization in accordance with a reception timing of the uplink signal.

In such a manner, it can be determined in accordance with the reception timing of the uplink signal that the mobile station whose reception timing is, for example, outside a reception window of the base station apparatus is out of synchronization.

### ADVANTAGE OF THE INVENTION

According to an example of the present invention, there are provided a base station and a communications control method wherein uplink orthogonality between mobile stations is maintained and the uplink transmission characteristic and capacity are improved.

### BRIEF DESCRIPTION OF THE DRAWINGS

Fig. 1 is a block diagram illustrating a configuration of a radio communications system according to an example of the present invention;
Fig. 2 is an explanatory view illustrating an example of uplink control channel mapping;
Fig. 3 is an explanatory view illustrating a configuration of a sub-frame and slots;
Fig. 4 is an explanatory view illustrating one slot;
Fig. 5 is an explanatory view illustrating one sub-frame;
Fig. 6 is a partial block diagram illustrating a base station apparatus according to an example of the present invention;
Fig. 7 is a block diagram illustrating a baseband section of the base station apparatus according to an example of the present invention;
Fig. 8 is an explanatory view illustrating out of synchronization in the base station apparatus according to an example of the present invention;
Fig. 9 is a flowchart illustrating an out of synchronization detection method according to an example of the present invention;
Fig. 10 is a flowchart illustrating a communications method according to an example of the present invention;
Fig. 11 is a flowchart illustrating a communications method according to an example of the present invention;
Fig. 12 a flowchart illustrating a communications method according to an example of the present invention;
Fig. 13 is a flowchart illustrating plural synchronization states and a control method thereof according to an example of the present invention; and
Fig. 14 is a flowchart illustrating a process for determining synchronization establishment at the time of starting communications, according to an example of the present invention.

### LIST OF REFERENCE SYMBOLS

50: cell
100₁, 100₂, 100₃, 100ₙ: mobile station
200: base station apparatus
202: transmission reception antenna
204: amplification section
206: transmission reception section
208: baseband processing section
210: call processing section
212: transmission path interface
2081: layer 1 processing section
2082 MAC processing section
2083: RLC processing section
2084: UL transmission timing control section
2085: out-of-synchronization detection section
300: access gateway apparatus
400: core network

### BEST MODE FOR CARRYING OUT THE INVENTION

Next, preferred embodiments for carrying out the present invention will be described in accordance with the following examples with reference to the drawings.

In the drawings for explaining the examples, the same reference symbols are used for elements having the same function, and repetitive explanations are omitted.

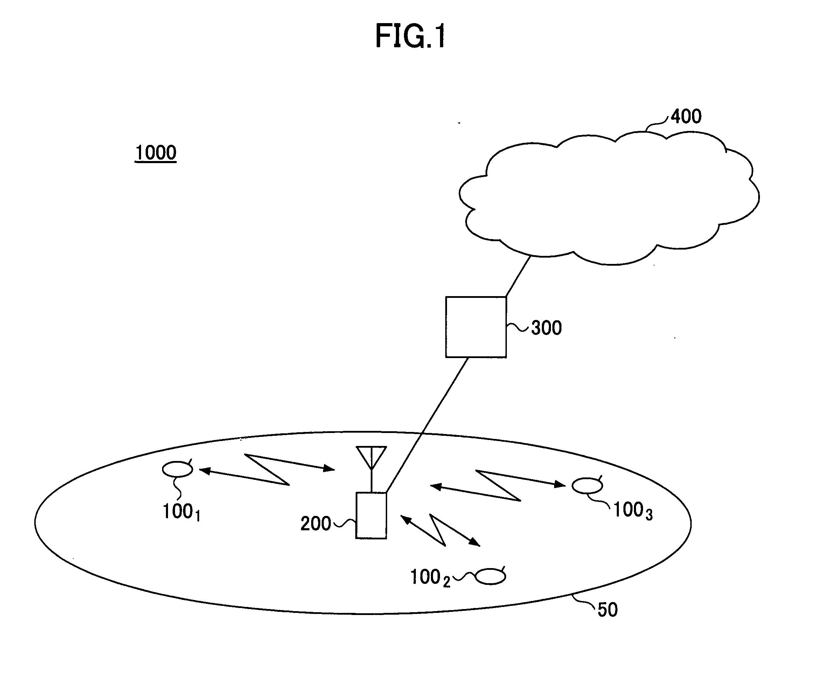

Referring to Fig. 1, a radio communications system is explained in which a base station apparatus according to an example of the present invention is applied.

A radio communications system 1000, to which Evolved UTRA and UTRAN (another name: Long Term Evolution or Super 3G) is applied, includes a base station apparatus (eNB: eNodeB) 200 and plural mobile stations (UE: User Equipment) 100ₙ (100₁, 100₂, 100₃, ..., 100ₙ, n: an integer more than zero). The base station apparatus 200 is connected to an upper layer station, for example, an access gateway apparatus 300, and the access gateway apparatus 300 is connected to a core network 400. The mobile station 100ₙ communicates with the base station apparatus 200 in a cell 50 under Evolved UTRA and UTRAN.

In the following, the mobile stations 100₁, 100₂, 100₃, ..., 100ₙ are referred to as the mobile station 100ₙ, unless otherwise noted, because they have the same configuration, function, and condition.

The radio communications system 1000 employs Orthogonal Frequency Division Multiplexing (OFDM) for downlink, and Single-Carrier Frequency Division Multiple Access (SC-OFDMA) for uplink as radio access methods. As stated above, in OFDM, a frequency band is divided into plural narrow frequency bands (sub-carriers), and data are placed on the respective divided frequency bands to carry out transmission. In SC-FDMA, a frequency band is divided, and different frequency bands are used by different terminal devices to carry out transmission, so that interference between the terminal devices can be reduced.

Communications channels in Evolved UTRA and UTRAN are explained.

In downlink, a Physical Downlink Shared Channel (PDSCH) to be used in a sharing manner by the mobile stations 100ₙ and a downlink control channel for LTE are used. Namely, the downlink channels mean the PDSCH and the downlink control channel for LTE. In downlink, transport format information and identification of a user to which PDSCH is transmitted, transport format information and identification of a user to which a Physical Uplink Shared Channel (PUSCH) is transmitted, acknowledgement information of the PUSCH and the like are provided through the downlink control channel for LTE, and user data are transmitted through the PDSCH. The transport format information and user information to be mapped in the PDSCH may be called Downlink Scheduling Information. In addition, user information to be mapped in the PUSCH may be called Uplink Scheduling Grant.

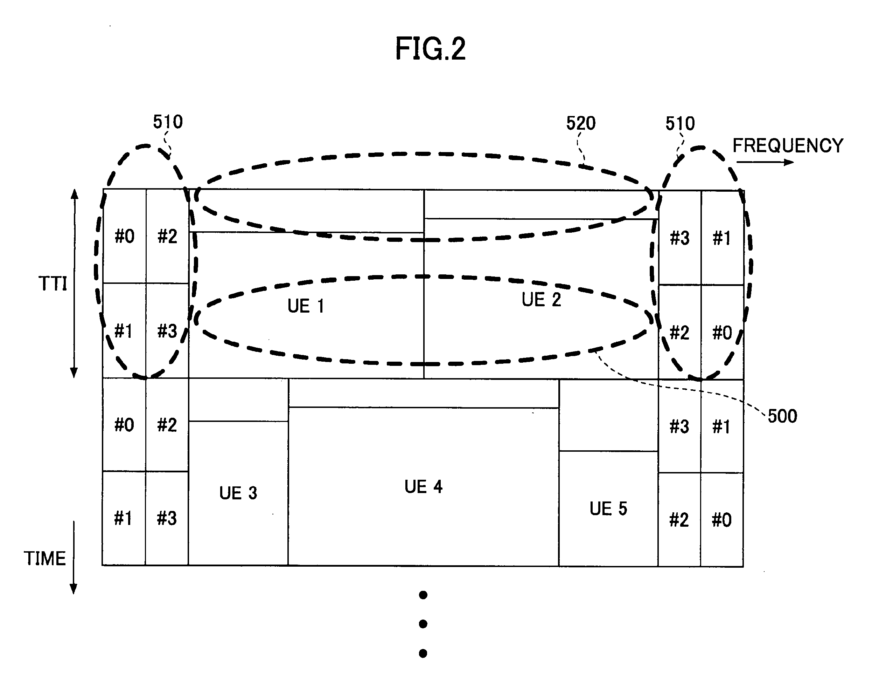

In uplink, the PUSCH to be used in a sharing manner by the mobile stations 100ₙ and an uplink control channel for LTE are used. Namely, the uplink channel means the PUSCH and the uplink control channel for LTE. The uplink control channel includes two types, i.e., a channel to be time-multiplexed in the PUSCH and a channel to be frequency-multiplexed in the PUSCH. Uplink control channel mapping is shown in Fig. 2. Frequency-multiplexed uplink control channels are mapped in different locations between 2 slots in the sub-frame in Fig. 2 (or frequency hopping is carried out). "500" represents the PUSCH, "510s" represent the channels frequency-multiplexed in the PUSCH, and "520" represents the channels time-multiplexed in the PUSCH in Fig. 2. A sub-frame length is 1 ms in LTE.

In uplink, PDSCH scheduling, downlink quality information (Channel Quality Indicator (CQI)) to be used for Adaptive Modulation Coding and Scheme (AMCS), and acknowledge information (HARQ ACK information) of the PDSCH are transmitted through the uplink control channel for LTE. In addition, user data are transmitted through the PUSCH.

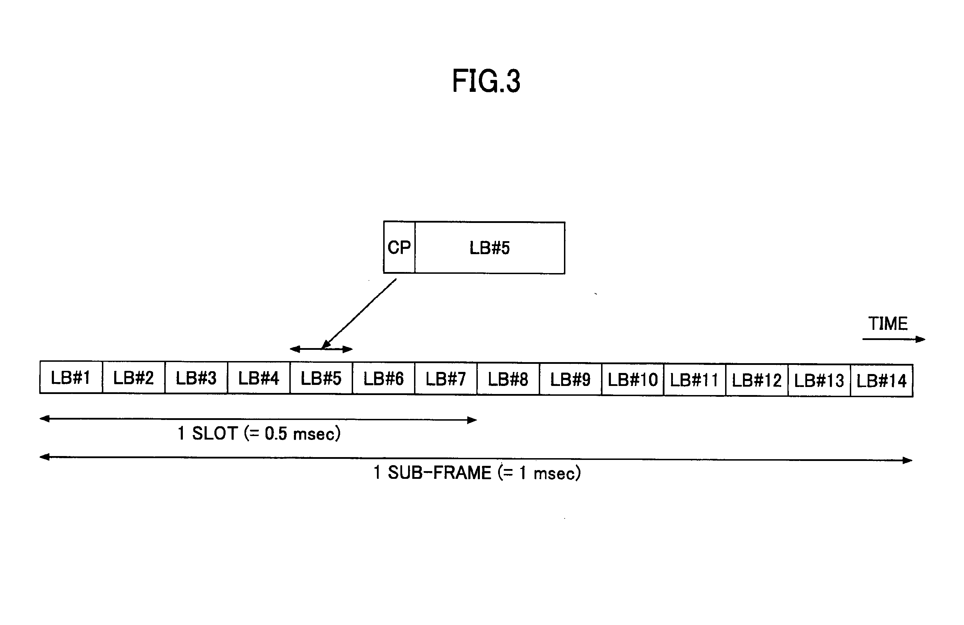

In uplink transmission, use of seven long blocks as shown in Fig. 3 is under consideration. In one long block of the seven blocks, a reference signal (pilot signal) for data demodulation (i.e., Demodulation Reference Signal) is mapped. Additionally, a reference signal (pilot signal) for sounding, which is to be used for determining a transmission format in the PUSCH in AMC, uplink transmission power control, and scheduling is transmitted through one long block or two or more long blocks of the seven blocks except the block where the Demodulation Reference Signal is mapped. In the long block through which the Sounding Reference Signal is transmitted, the sounding reference signals from plural mobile stations are multiplexed by Code Division Multiplexing (CDM).

Because one sub-frame is made of two slots, one sub-frame is made of fourteen long blocks as shown in Fig. 3. The demodulation reference signals are mapped in, for example, a fourth long block and an eleventh long block. The long blocks may be called SC-FDMA symbols.

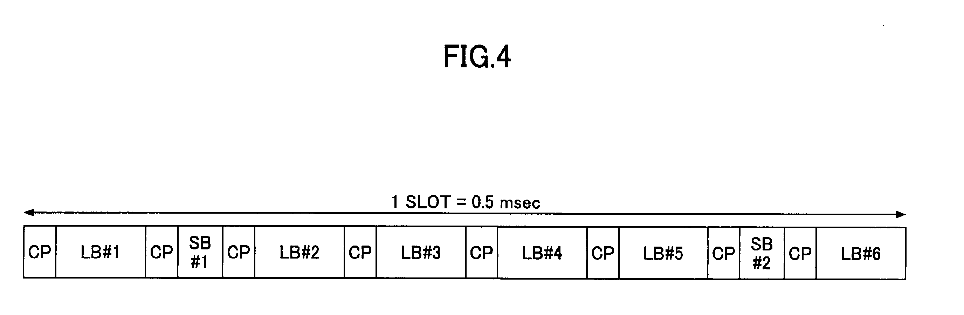

Alternatively, use of two short blocks (SB) and six long blocks (LB) in each slot as shown in Fig. 4 is under consideration as the uplink transmission format. In one long block or two or more long blocks of the six long blocks, a reference signal (pilot signal) for sounding to be used for determining PUSCH transmission format in AMC (i.e., Sounding Reference Signal), uplink transmission power control, and scheduling is mapped. In the long block(s) through which the sounding reference signal is transmitted, the sounding reference signals from plural mobile stations are multiplexed by Code Division Multiplexing. Two short blocks are used for transmitting a reference signal (pilot signal) for data demodulation (i.e., Demodulation Reference Signal).

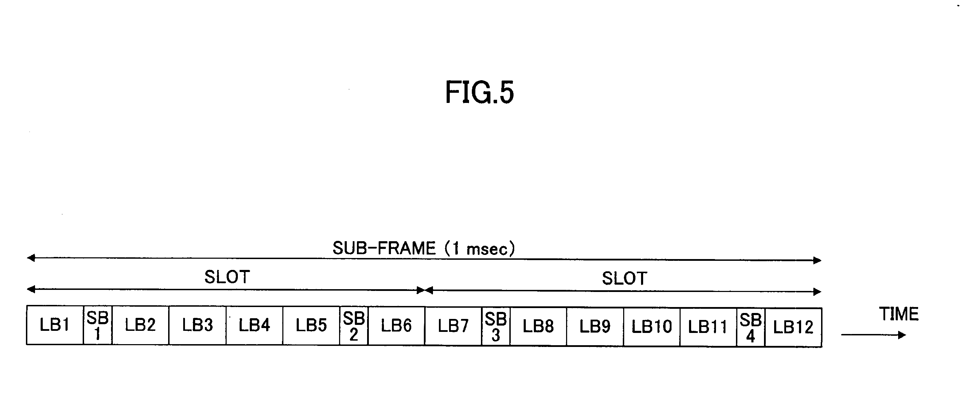

Because one sub-frame is composed of two slots, one sub-frame is composed of four short blocks and twelve long blocks as shown in Fig. 5.

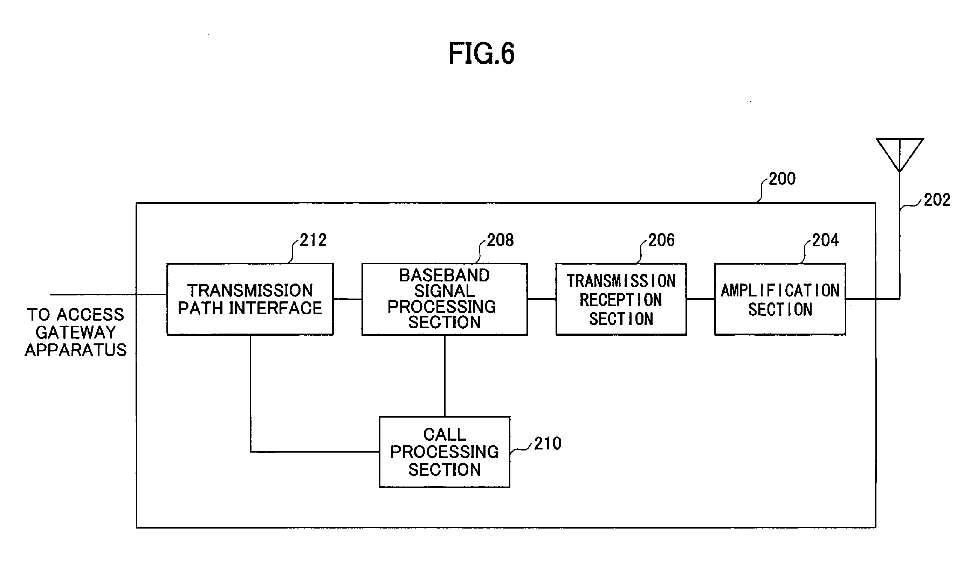

Next, the base station apparatus 200 according to an example of the present invention is explained with reference to Fig. 6.

The base station apparatus 200 according to this example includes a transmission/reception antenna 202, an amplification section 204, a transmission/reception section 206, a baseband signal processing section 208, a call processing section 210, and a transmission path interface 212.

Packet data transmitted from the base station apparatus 200 to the mobile station 100ₙ through downlink are input to the baseband signal processing section 208 from, for example, the access gateway apparatus 300 via the transmission path interface 212.

In the baseband signal processing section 208, the packet data undergoes segmentation/concatenation, Radio Link Control (RLC) layer transmission processing such as an RLC retransmission control, an MAC retransmission control, transmission processing of, for example, Hybrid Automatic Repeat request (HARQ), scheduling, transmission format selection, channel coding, Inverse Fast Fourier Transform (IFFT) processing, and is forwarded to the transmission/reception section 206.

In the transmission/reception section 206, the baseband signal output from the baseband signal processing section 208 undergoes frequency conversion processing for converting to a radio frequency band signal, is amplified by the amplification section 204, and is transmitted from the transmission/reception antenna 202.

On the other hand, regarding data transmitted from the mobile station 100ₙ to the base station apparatus 200 in uplink, the radio frequency band signal received by the transmission/reception antenna 202 is amplified by the amplification section 204, frequency-converted into a baseband signal by the transmission/reception section 206, and input to the baseband signal processing section 208.

In the baseband signal processing section 208, the input baseband signal undergoes FFT processing, IDFT processing, error correction decoding, reception processing for the MAC retransmission control, RLC layer reception processing, and is forwarded to the access gateway apparatus 300 via the transmission path interface 212. In addition, the baseband signal processing section 208 determines in accordance with the uplink signal transmitted by the mobile station 100ₙ whether synchronization between the own base station apparatus 200 and the mobile station 100ₙ is established. For example, the baseband signal processing section 208 determines whether the synchronization between the own base station apparatus 200 and the mobile station 100ₙ is established, in accordance with whether the SIR of the uplink reference signal (pilot signal) (i.e., Sounding Reference Signal or Demodulation Reference Signal), the data error rate and the reception timing are limited within the reception window.

The call processing section 210 carries out resource assignment and state management of the radio station 200. The call processing section 210 may carry out processing for disconnecting communications with the mobile station 100ₙ whose synchronization is determined to be lost by the baseband signal processing section 208. At this time, the call processing section 210 may carry out the processing for disconnecting communications with the mobile station 100ₙ when a state where the baseband signal processing section 208 determines that out of synchronization continues for a predetermined threshold time period or more.

In addition, the call processing section 210 may provide signaling for directing the reestablishment of the uplink synchronization using a Random Access Channel (RACH) to the mobile station 100ₙ whose synchronization is determined to be lost by the baseband signal processing section 208. At this time, the call processing section 210 may carry out signaling for directing the reestablishment of the uplink synchronization using the Random Access Channel (RACH) to the mobile station 100ₙ whose synchronization is determined to be lost by the baseband signal processing section 208 when a state where the baseband signal processing section 208 determines that out of synchronization continues for a predetermined threshold time period or more. Here, control information in the MAC layer may be used, or the RRC message may be used in the above signaling.

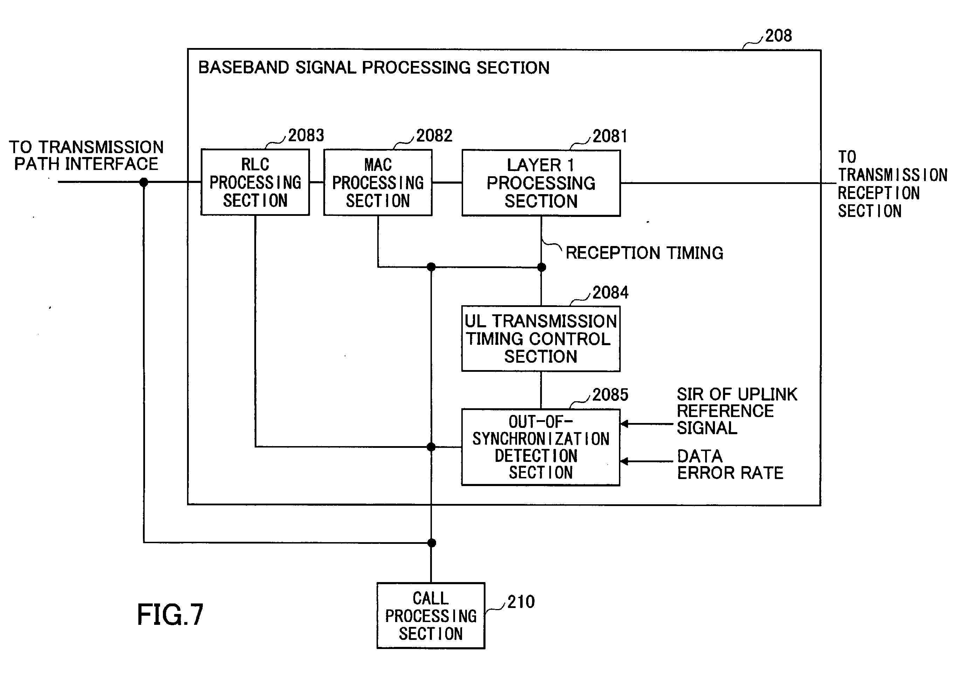

Next, a configuration of the baseband signal processing section 208 is explained with reference to Fig. 7.

The baseband signal processing section 208 includes a layer 1 processing section 2081, a Medium Access Control (MAC) processing section 2082, an RLC processing section 2083, and an Uplink (UL) transmission timing control section 2084, and an out-of-synchronization detection section 2085.

The layer 1 processing section 2081, the MAC processing section 2082, the UL transmission timing control section 2084, the out-of-synchronization detection section 2085, the RLC processing section 2083 in the baseband signal processing section 208, and the call processing section 210 are connected with one another.

The layer 1 processing section 2081 carries out channel coding of the data transmitted in downlink, IFFT processing, channel decoding of the data transmitted in uplink, FFT processing and the like. The data transmitted in uplink include the uplink shared channel and the uplink control channel. The uplink control channel includes acknowledge information for the down link shared channel and CQI.

The layer 1 processing section 2081 measures reception timing of the signal transmitted by the mobile station 100ₙ, and provides the UL transmission timing control section 2084 with reception timing location information indicating where the reception time is located in the reception window. The layer 1 processing section 2081 determines in advance uplink reference reception timing (referred to as reference FFT timing, below) with respect to downlink transmission timing in accordance with, for example, a cell radius. Here, the reference FFT timing means reception timing when a mobile station positioned at a cell edge transmits at the minimum timing without delaying transmission timing. Information indicating the transmission timing (UL transmission timing control signal) transmitted in downlink from the base station apparatus 200 is determined so that the reception timing at which the mobile station 100ₙ ideally transmits the uplink signal in accordance with the UL transmission timing control signal is equal to the reference FFT timing.

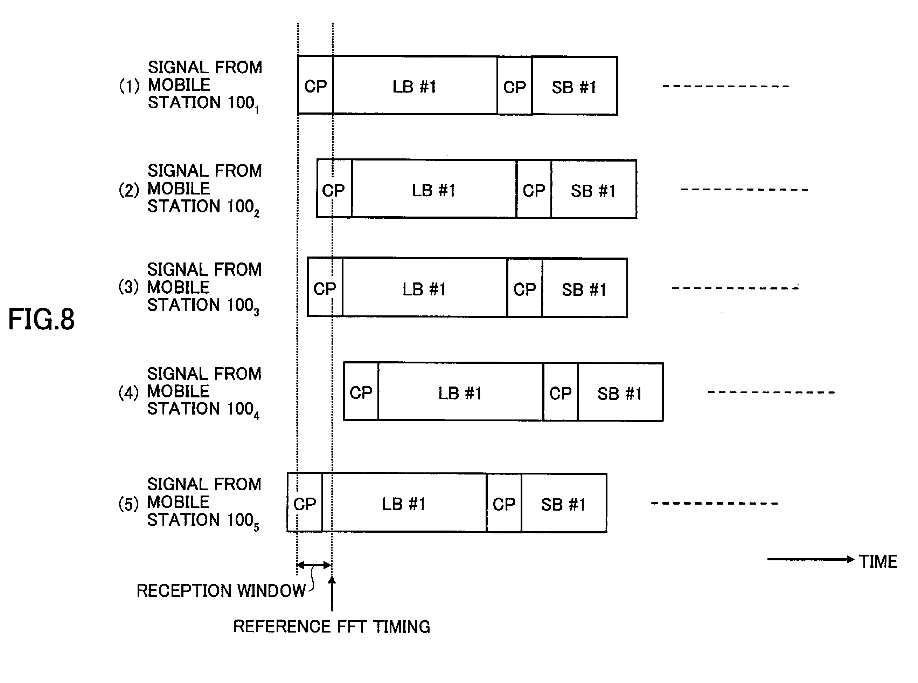

The layer 1 processing section 2081 uses, for example, the uplink reference signal or the sounding reference signal to detect the reception timing of the signal from each mobile station 100ₙ. As a result, the reception timings for the mobile stations 100₁ through 100₅ as shown in Fig. 8, which shows a head section of the sub-frames, can be detected. While an example of a single path is shown, all paths having reception power larger to some extent have to be limited within the reception window in the case of a multi-path.

The layer 1 processing section 2081 calculates a difference between the reference FFT timing and a preferable reception timing of each mobile station (referred to as a preferable FFT timing), for example, the preferable FFT timing - the reference FFT timing, and outputs the difference as the reception timing location information to the UL transmission timing control section 2084. The reception timing detection for each mobile station may be carried out using the uplink sounding reference signal, or a Channel Quality Indicator (CQI) feedback channel or the demodulation reference signal when characteristics can be improved.

The layer 1 processing section 2081 calculates the SIR of the uplink reference signal (i.e., the Sounding Reference Signal or the Demodulation Reference Signal), and provides the out-of-synchronization detection section 2085 with the SIR. The layer 1 processing section 2081 may calculate the SIR of the CQI instead of the SIR of the uplink reference signal, and provide the out-of-synchronization detection section 2085 with the SIR of the CQI. Alternatively, the layer 1 processing section 2081 may calculate the SIR of the CQI in addition to the SIR of the uplink reference signal, and provide the out-of-synchronization detection section 2085 with the SIRs.

The MAC processing section 2082 carries out the downlink data MAC retransmission control, transmission processing of, for example, the Hybrid Automatic Repeat request (HARQ), scheduling, transmission format selection and the like. In addition, the MAC processing section 2082 carries out the reception processing of the uplink MAC retransmission control and the like.

In addition, when the MAC processing section 2082 is directed from the UL transmission timing control section 2084 to provide the mobile station 100ₙ with the UL (Uplink) transmission timing control signal, for example, timing advance (TA), the MAC processing section 2082 provides the timing advance to the mobile station 100ₙ. The timing advance may be transmitted as, for example, control information in the physical layer, or as control information in the MAC layer.

In this case, the MAC processing section 2082 may monitor whether the acknowledgement information for the downlink shared channel including the timing advance is ACK, and provide the UL transmission timing control section 2084 with the monitor result.

When the MAC processing section 2082 receives acknowledgement indicating that the mobile station 100ₙ is out of synchronization from the out-of-synchronization detection section 2085, the MAC processing section 2082 carries out processing for excluding this mobile station 100ₙ from mobile stations subject to scheduling. In other words, the MAC processing section 2082 carries out the scheduling for assigning the uplink shared channel to the mobile stations that are not out of synchronization. The MAC processing section 2082 not only excludes the mobile station 100ₙ from the mobile stations subject to the scheduling for assigning the uplink shared channel but also may exclude the mobile station 100ₙ from the mobile stations subject to the scheduling for assigning the downlink shared channel.

The MAC processing section 2082 obtains an uplink error rate in the MAC layer, and provides the out-of-synchronization detection section 2085 with the uplink error rate. Here, the uplink error rate means either one of an error rate after HARQ, and an error rate in the Physical layer, namely an error rate in one transmission in HARQ.

In the RLC processing section 2083, RLC layer transmission processing regarding the downlink packet data such as segmentation/concatenation, transmission processing of the RLC retransmission control and the like, and RLC layer reception processing regarding the uplink data such as segmentation/concatenation, the RLC retransmission control, and the like are carried out.

The RLC processing section 2083 obtains an uplink error rate in the RLC layer, and provides the out-of-synchronization detection section 2085 with the uplink error rate.

The UL transmission timing control section 2084 provides the mobile station 100ₙ, via the MAC processing section 2082 or the layer 1 processing section 2081, with the UL transmission timing control signal, for example, the timing advance, in accordance with the reception timing location information of each mobile station 100ₙ provided from the layer 1 processing section 2081, when necessary. For example, the UL transmission timing control section 2084 determines the transmission timing for adjusting the transmission timing of the multi-path reception signals from plural concurrently accessing mobile stations 100ₙ to be limited within a Cyclic Prefix (CP) in the reception end of the own base station apparatus 200, and provides the mobile station 100ₙ, via the MAC processing section 2082 or the layer 1 processing section 2081, with an adjusting amount of the transmission amount to be adjusted by the mobile station 100ₙ in order to realize the transmission timing, as the UL transmission timing control signal. The adjusting amount to be adjusted by the mobile station 100ₙ is calculated from, for example, "the preferable FFT timing for each mobile station - the reference FFT timing". Namely, the adjusting amount is calculated in order to realize "the preferable FFT timing for each mobile station - the reference FFT timing = 0". Each mobile station 100ₙ controls the transmission timing in accordance with the UL transmission timing control signal provided from the base station apparatus 200. Therefore, the reception timings of the uplink signals transmitted from each mobile station 100ₙ are limited within the Cyclic Prefix length in the reception end of the base station apparatus 200. As a result, orthogonality between the mobile stations 100ₙ is maintained. The transmission timing control at a first time in the mobile station 100ₙ is carried out in accordance with the UL transmission timing control signal multiplexed in the RACH response of the Non-synchronization Random Access Channel (Non-sync RACH).

The UL transmission timing control section 2084 may carry out the transmission of the timing advance regardless of the determination result of out of synchronization in the out-of-synchronization detection section 2085 (described later), or carry out the transmission of the timing advance in accordance with the determination result of out of synchronization in the out-of-synchronization detection section 2085. When the transmission of the timing advance is carried out in accordance with the determination result of out of synchronization in the out-of-synchronization detection section 2085, the UL transmission timing control section 2084 may operate so that timing advance is not transmitted to the mobile station 100ₙ that has been determined to be out of synchronization. Alternatively, when out of synchronization is determined in accordance with the SIR of the uplink reference signal or the data error rate, the timing advance is not transmitted. However, when out of synchronization is not determined in accordance with the SIR of the uplink reference signal or the data error rate but is determined in accordance with whether the reception timing is limited with the reception window of the own base station apparatus 200, the UL transmission timing control section 2084 may operate so that the timing advance is transmitted.

Moreover, the UL transmission timing control section 2084 provides the out-of-synchronization detection section 2085 with the reception timing location information of each mobile station 100ₙ provided from the layer 1 processing section 2081.

In addition, the UL transmission timing control section 2084 may manage a history record about the fact that the transmission timing control signal has been transmitted to each mobile station 100ₙ in the past. More specifically, the UL transmission timing control section 2084 may measure elapsed time from the transmission timing at which the UL transmission timing control signal (so-called timing advanced command) had been transmitted to the mobile station 100ₙ last time, and determine whether the elapsed time exceeds a predetermined timer. This predetermined timer may be called a UL Out-of-sync timer. The UL transmission timing control section 2084 may define the last transmission timing at which the UL transmission timing control signal had been transmitted to the mobile station 100ₙ as timing at which the UL transmission timing control signal is mapped in the downlink shared channel and transmitted, or as timing at which the UL transmission timing control signal has been mapped in the downlink shared channel and transmitted, and, after this, the ACK as the acknowledgement information with respect to the shared channel is received. In this case, whether the ACK is received is provided from the layer 1 processing section 2081 and the MAC processing section 2082.

The UL transmission timing control section 2084 provides the out-of-synchronization detection section 2085 with the determination result about whether the elapsed time from the transmission timing at which the UL transmission timing control signal had been transmitted to the mobile station 100ₙ last time exceeds the predetermined timer.

The out-of-synchronization detection section 2085 determines whether synchronization is established between the own base station apparatus 200 and the mobile station 100ₙ in accordance with the SIR of the uplink reference signal provided from the layer 1 processing section 2081 (pilot signal, namely, Sounding Reference Signal or Demodulation Reference Signal), the data error rate provided from the MAC processing section 2082 or the RLC processing section 2083, and whether the reception timing is limited within the reception window of the own base station apparatus 200.

For example, the out-of-synchronization detection section 2085 determines whether the SIR of the uplink reference signal provided from the layer 1 processing section 2081 is less than or equal to a predetermined threshold value. When the SIR is less than or equal to the threshold value, the out-of-synchronization detection section 2085 determines that the uplink between the own base station apparatus 200 and the mobile station 100ₙ is out of synchronization, and when the SIR exceeds the threshold value, the out-of-synchronization detection section 2085 determines that the uplink synchronization is established between the own base station apparatus 200 and the mobile station 100ₙ. The out-of-synchronization detection section 2085 may determine that the synchronization is lost when a state
where the SIR of the uplink reference signal is less than or equal to the predetermined threshold continues for more than a predetermined time period. The out-of-synchronization detection section 2085 may make the same determination in accordance with the SIR of the CQI when the SIR of the CQI is provided from the layer 1 processing section 2081, instead of the SIR of the reference signal. Alternatively, the out-of-synchronization detection section 2085 may make the same determination in accordance with both the SIR of the reference signal and the SIR of the CQI when the SIR of the CQI is provided from the layer 1 processing section 2081 in addition to the SIR of the reference signal. In this case, when determination results based on both SIRs show that the synchronization is lost, it may be determined that the synchronization is lost, or when a determination result based on either one of the SIRs shows that the synchronization is lost, it may be determined that the synchronization is lost.

Moreover, the out-of-synchronization detection section 2085 may determine whether the uplink is out of synchronization in accordance with the determination result about whether the elapsed time from the transmission timing at which the UL transmission timing control signal had been transmitted last time exceeds the predetermined timer, the determination result being received from the UL transmission timing control section 2084, in addition to the synchronization determination based on the SIR of the uplink reference signal. More specifically, when the elapsed time from the transmission timing at which the UL transmission timing control signal was transmitted last time exceeds the predetermined timer, it is determined that the uplink is out of synchronization, and in other cases it may be determined that the synchronization is not lost. In this case, when out of synchronization is determined in both the synchronization determination based on the SIR of the uplink reference signal and the synchronization determination based on whether the elapsed time from the transmission timing at which the UL transmission timing control signal had been transmitted last time exceeds the predetermined timer, it may be determined that the synchronization is lost. Alternatively, when out of synchronization is determined in either one of the synchronization determination based on the SIR of the uplink reference signal and the synchronization determination based on whether the elapsed time from the transmission timing at which the UL transmission timing control signal had been transmitted last time exceeds the predetermined timer, it may be determined that the synchronization is lost.

In addition, the out-of-synchronization detection section 2085 may determine whether the data error rate provided from the MAC layer processing section 2082 or the RLC layer processing section 2083 is more than or equal to the predetermined threshold value. When the data error rate is more than or equal to the threshold value, the out-of-synchronization detection section 2085 determines that the uplink between the own base station apparatus 200 and the mobile station 100ₙ is out of synchronization. When the data error rate is less than the threshold value, the uplink synchronization is established between the own base station apparatus 200 and the mobile station 100ₙ. The out-of-synchronization detection section 2085 may determine that the uplink is out of synchronization when a state where the uplink data error rate is more than or equal to the threshold value continues for more than a predetermined time period.

Here, the uplink data error rate may mean any one of the error rate in the RLC layer, the error rate in the MAC layer, the error rate after the HARQ is carried out, the error rate in the physical layer, and the error rate in one transmission in the HARQ. In addition, as an error rate equivalent, the number of retransmissions in the MAC layer may be used.

In addition, the above determination may be carried out based on the number of errors that has continuously taken place, instead of the uplink data error rate. For example, in each transmission of the HARQ in the MAC layer, when thirty errors have continuously taken place, out of synchronization may be determined, and when no error takes place, the synchronization may be determined to be not lost. Such error determination may be carried out in accordance with the error in the RLC layer or the error after the HARQ is carried out.

Furthermore, for example, the out-of-synchronization detection section 2085 determines whether the uplink signal reception timing is limited within the reception window of the own base station apparatus 200. When the uplink signal reception timing is not limited within the reception window, the uplink between the own base station apparatus 200 and the mobile station 100ₙ is determined to be out of synchronization. When the uplink signal reception timing is limited within the reception window, the uplink synchronization between the own base station apparatus 200 and the mobile station 100ₙ is determined to be established. Here, for example, the reception window is defined with the CP length and the FFT timing.

For example, the out-of-synchronization detection section 2085 determines in accordance with the reception timing location information of each mobile station 100ₙ input from the UL transmission timing control section 2084 that the synchronization is lost when the reception timing location information is more than or equal to a threshold value and that the synchronization is established when the reception timing location information is less than the threshold value.

The out-of-synchronization detection section 2085 may determine that the synchronization is lost when a state where the reception timing location information is more than or equal to the threshold value continues for more than a predetermined time period.

When the synchronization is determined to not be established when a predetermined time period or more has passed in the above three synchronization determination schemes of the SIR of the uplink reference signal, the data error rate, and the reception timing, the out-of-synchronization detection section 2085 may set the predetermined time period to be different in each determination scheme. For example, in the determination in accordance with the SIR of the uplink reference signal or the data error rate, when a state where the SIR of the uplink reference signal of the mobile station 100ₙ in communications is less than or equal to the predetermined threshold value, or a state where the uplink data error rate is more than or equal to the predetermined threshold value continues for relatively a long time of about 160 ms, respectively, the synchronization may be determined to not exist. In the determination based on the reception timing, when a state where the uplink reception timing of the mobile station 100ₙ in communications is not limited within the reception window of the radio base station continues for a relatively short time of about 10 ms, the synchronization may be determined to not exist.

The out-of-synchronization detection section 2085 may carry out the synchronization determination using all the three out of synchronization determination indicators of the SIR of the uplink reference signal, the data error rate, and the reception timing, or using one or two of the three indicators.

In addition, plural out of synchronization states may be set in accordance with the three out of synchronization indicators. For example, when the synchronization is detected to not exist in the out of synchronization determination scheme using the indicator of the reception timing, and the synchronization is detected to exist in the out of synchronization determination schemes using the indicators of the SIR of the uplink reference signal and the data error rate, such a state may be defined as an out of synchronization state A. When the synchronization is detected to not exist in the out of synchronization determination schemes using all the three indicators, such a state is defined as an out of synchronization state B. In this case, processing may be carried out depending on each state. For example, the processing for excluding the mobile station 100ₙ from the mobile stations subject to the scheduling is carried out for the mobile station 100ₙ determined to be in out of synchronization state A, and not only the processing for excluding a mobile station 100ₙ from the mobile stations subject to the scheduling but also the processing for providing signaling for directing reestablishment of the uplink synchronization using the Random Access Channel (RACH) may be carried out for the mobile station 100ₙ determined to be in out of synchronization state B.

Furthermore, the out-of-synchronization detection section 2085 may determine whether the synchronization between the own base station apparatus 200 and the mobile station 100ₙ is established in accordance with the SIR of the uplink reference signal (pilot signal, namely, Sounding Reference Signal or Demodulation Reference Signal) provided from the layer 1 processing section 2081 and whether the reception timing is limited within the reception window of the own base station apparatus 200, when new communications with the mobile station 100ₙ is started.

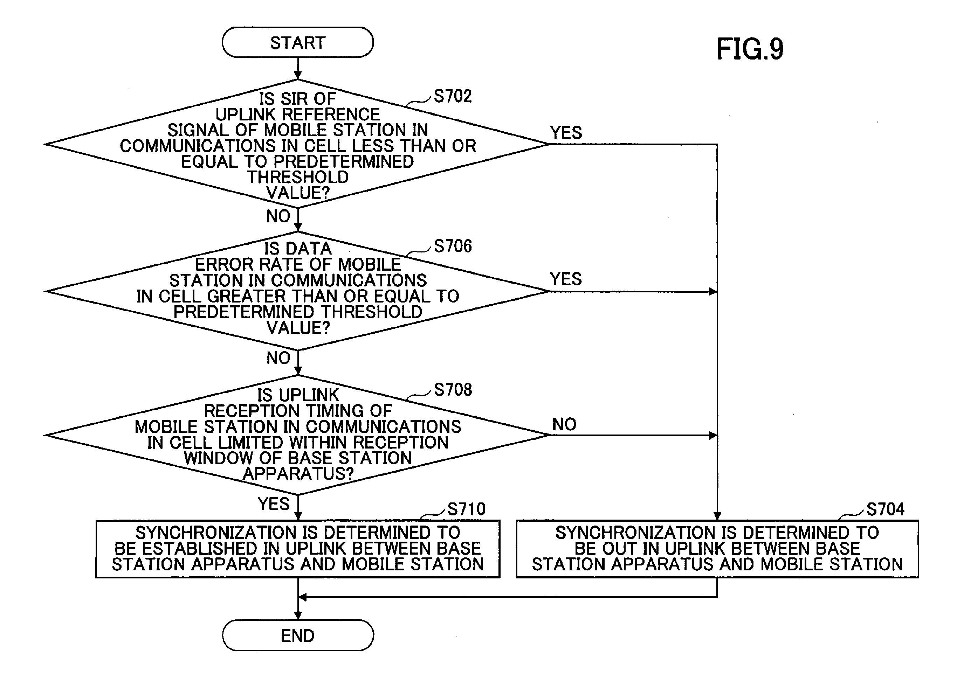

Next, an uplink out of synchronization detection method as a transmission control method in the base station apparatus 200 according to this example of the present invention is explained with reference to Fig. 9.

The out-of-synchronization detection section 2085 determines whether the SIR of the uplink reference signal of the mobile station 100ₙ in communications in the cell covered by the own base station apparatus 200 is less than or equal to the predetermined threshold value (step S702).

When the SIR of the reference signal is less than or equal to the predetermined threshold value (step S702: YES), the out-of-synchronization detection section 2085 determines that the uplink between the own base station apparatus 200 and the mobile station 100ₙ is out of synchronization (step S704). For example, the synchronization is determined to be lost when a time period during which the SIR of the uplink reference signal of the mobile station 100ₙ in communications is less than or equal to the predetermined threshold value exceeds a predetermined time period, or for example, continues about 160 ms, the out-of-synchronization detection section 2085 may determine that the synchronization is lost.

On the other hand, when the SIR of the reference signal is not less than or equal to a predetermined threshold value (Step S702: NO), the out-of-synchronization detection section 2085 determines whether the uplink data error rate for the mobile station 100ₙ in communications in the cell is larger than or equal to a predetermined threshold value (Step S706).

When the uplink data error rate is larger than or equal to the predetermined threshold value (Step S706: YES), the out-of-synchronization detection section 2085 determines that the uplink between the own base station apparatus 200 and the mobile station 100ₙ is out of synchronization (Step S704). For example, when a time period during which the uplink data error rate of the mobile station 100ₙ in communications is larger than or equal to the predetermined threshold value exceeds a predetermined time period, or, for example, continues for example 160 ms, it may be determined that the synchronization is lost.

On the other hand, when the uplink data rate is not larger than or equal to the predetermined value (Step S706), the out-of-synchronization detection section 2085 determines whether the uplink reception timing of the mobile station 100ₙ in communications in the cell is limited within the reception window (Step S708).

When the uplink reception timing is not limited within the reception window of the radio base station (Step S708: NO), the out-of-synchronization detection section 2085 determines that the uplink between the own base station apparatus 200 and the mobile station 100ₙ is out of synchronization (Step S704). For example, when a time period during which the uplink reception timing of the mobile station 100ₙ in communications is not limited within the reception window of the radio station exceeds a predetermined time period, or, for example, continues about 160 ms, it may be determined that the synchronization is lost.

On the other hand, when the uplink reception timing is limited within the reception window of the radio base station (Step S708: YES), it is determined that the uplink synchronization is established between the own base station apparatus 200 and the mobile station 100ₙ (Step S710).

In out of synchronization detection method described above, the order of Step S702, Step S706 and Step S708 is not limited to the described order, but they may be carried out in any order. In addition, it is not required that all the steps be carried out, but at least one of them may be carried out to detect out of synchronization.

In addition, a time period required to carry out the determination in Step S702, Step S706 and Step S708 may be set to be different values. For example, the synchronization may be determined to be lost when a state where the SIR of the uplink reference signal of the mobile station 100ₙ in communications is less than or equal to the predetermined value, or a state where the uplink data error is larger than or equal to the predetermined value continues for a relatively long time period of about 160 ms in Step S702 and Step S706, respectively. The synchronization may be determined to be lost when a state where the uplink reception timing of the mobile station 100ₙ in communications is not limited within the reception window of the radio base station continues for a relatively short time period of about 10 ms in Step S708.

Moreover, the determination result about whether the elapsed time from the timing at which the UL transmission timing control signal is transmitted at the last time may be taken into consideration in the determination in accordance with the SIR of the uplink reference signal in Step S702, as described above.

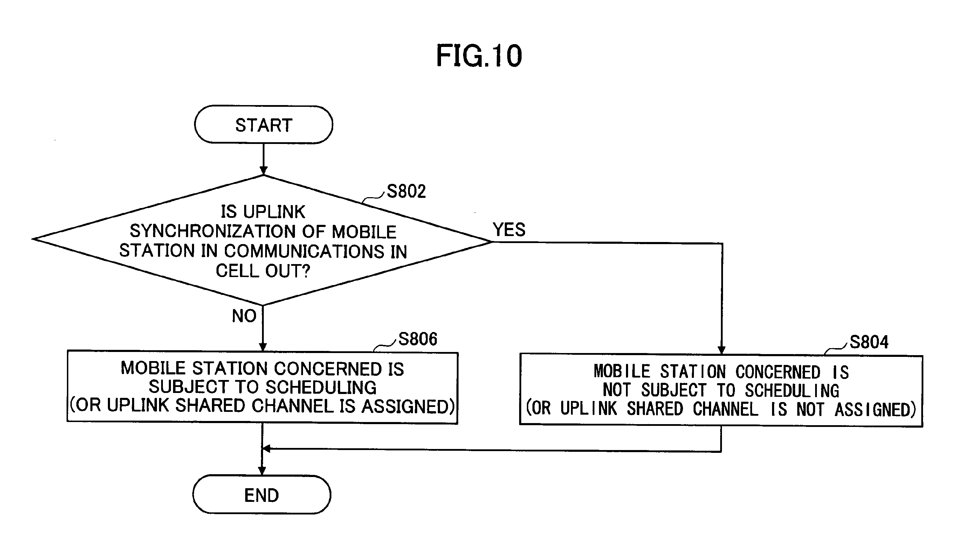

Next, a scheduling method in the MAC processing section 2082 is described as a transmission control method in the base station apparatus 200 according to this example with reference to Fig. 10.

The MAC processing section 2082 determines whether the uplink synchronization is established for each mobile station in communications that exists in the cell covered by the own base station apparatus 200 (Step S802). For example, out of synchronization is detected by the uplink out of synchronization detection method described above.

When it is determined that the uplink is out of synchronization (Step S802: YES), the MAC processing section 2082 excludes the mobile station whose uplink is out of synchronization from mobile stations subject to the scheduling (Step S804). As a result, the uplink shared channel is not assigned to this mobile station whose uplink is out of synchronization.

On the other hand, when it is not determined that the uplink is out of synchronization (Step S802: NO), the MAC processing section 2082 makes the mobile station whose uplink synchronization is established a subject to the scheduling (Step S806). As a result, the uplink shared channel is assigned to this mobile station whose uplink synchronization is established.

Here, "to make a subject to the scheduling" means "to designate a candidate to which the uplink shared channel is assigned", but whether the channel is actually assigned depends on the scheduler. In addition, "to assign the uplink shared channel" means that the uplink shared channel is actually assigned to allow communications to be carried out. Moreover, although the above example shows the processing for the uplink shared channel, processing for determining whether a mobile station should be subject to the scheduling for the downlink shared channel in accordance with whether the synchronization is established may be carried out in the same manner.

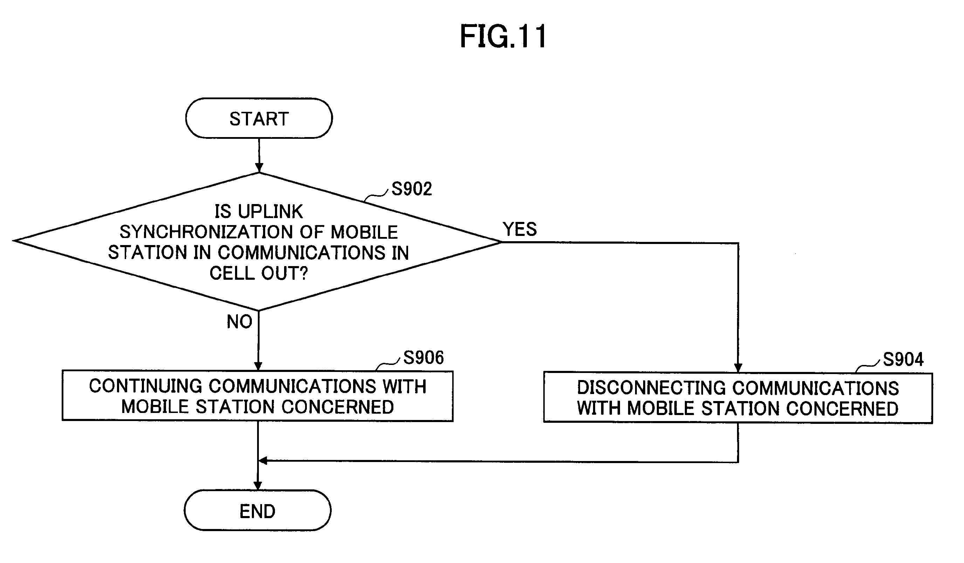

Next, a communications control method in the call processing section 210 is explained as a transmission control method in the base station apparatus 200 according to this example with reference to Fig. 11.

The call processing section 210 determines whether the uplink is out of synchronization for each mobile station in communications that exists in the cell covered by the own base station apparatus 200 (Step S902). For example, the uplink out of synchronization is detected by out of synchronization detection method described above.

When it is determined that the uplink is out of synchronization (Step S902: YES), the call processing section 210 disconnects communications with the mobile station whose uplink is out of synchronization (Step S904).

On the other hand, when it is not determined that the uplink is out of synchronization (Step S902: NO), the call processing section 210 continues communications with the mobile station whose uplink is not out of synchronization (Step S906).

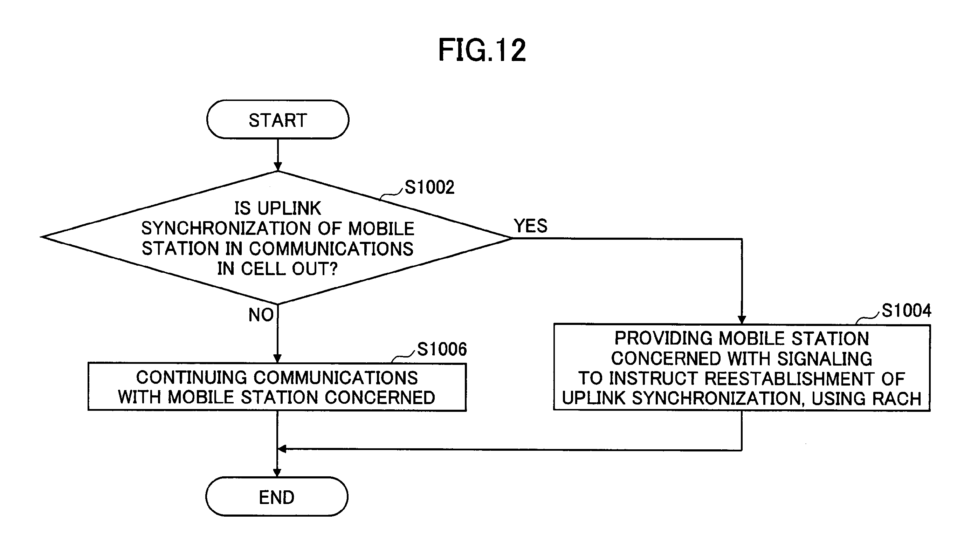

Next, another communications control method in the call processing section 210 is explained as the transmission control method in the base station apparatus 200 according to this example with reference to Fig. 12.

The call processing section 210 determines whether the uplink is out of synchronization for each mobile station in communications that exists in the cell covered by the own base station apparatus 200 (Step S1002). For example, out of synchronization is detected by the uplink out of synchronization detection method described above.

When it is determined that the uplink is out of synchronization (Step S1002: YES), the call processing section 210 provides the mobile station whose uplink is out of synchronization with signaling for directing reestablishment of the uplink synchronization using RACH (Step S1004). Here, the signaling for directing the reestablishment of the uplink synchronization using RACH may be provided by using RRC, or using control information of the MAC layer.

On the other hand, when it is not determined that the uplink is out of synchronization (Step S1002: NO), the call processing section 210 continues communications with the mobile station whose uplink is not out of synchronization (Step S1006).

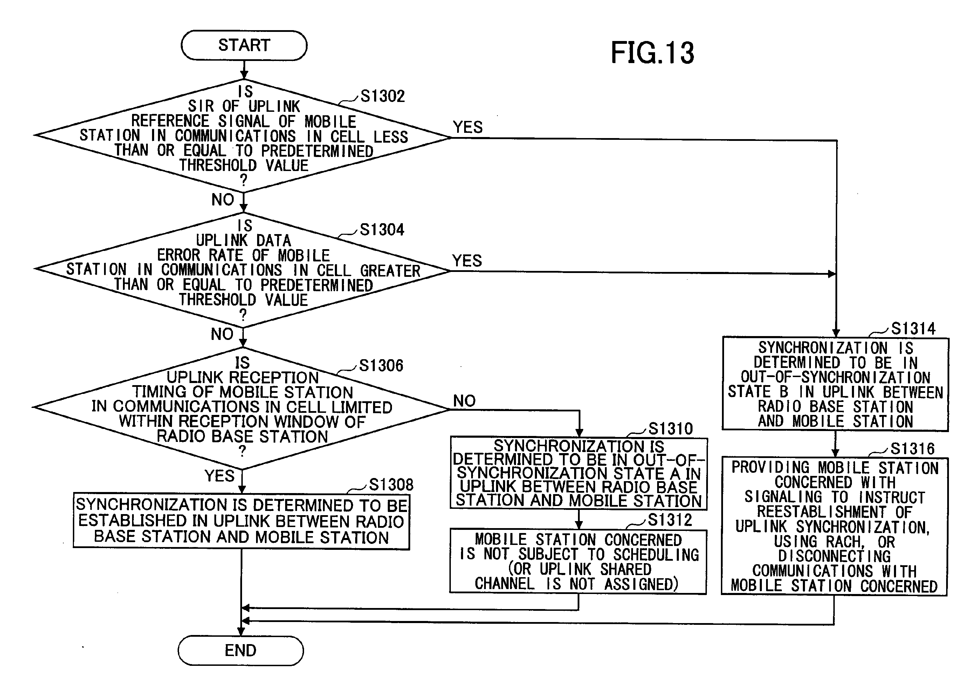

Next, plural synchronization states in the base station apparatus 200 according to this example and a control method thereof are explained with reference to Fig. 13.

Whether the SIR of the uplink reference signal of the mobile station in communications in the cell is less than or equal to a predetermined threshold value is determined (Step S1302).

When the SIR of the uplink reference signal of the mobile station in communications in the cell is not less than or equal to the predetermined threshold value (Step S1302: NO), whether the uplink data error rate of the mobile station in communications in the cell is larger than or equal to a predetermined threshold value is determined (Step S1304).

When the SIR of the uplink reference signal of the mobile station in communications in the cell is less than or equal to the predetermined threshold value (Step S1302: YES) or when the uplink data error rate of the mobile station in communications in the cell is larger than or equal to the predetermined threshold value (Step S1304: YES), out of synchronization state B is determined in uplink between the radio base station and the mobile station (Step S1314). Then, the signaling is provided to direct reestablishment of the uplink synchronization using RACH to the above mobile station, or the communications with the above mobile station is disconnected (Step S1316).

On the other hand, when the SIR of the uplink reference signal of the mobile station in communications in the cell is not less than or equal to the predetermined threshold value (Step S1302: NO) and the uplink data error rate of the mobile station in communications in the cell is not larger than or equal to the predetermined threshold value (Step S1304: NO), whether the uplink reception timing of the mobile station in communications in the cell is limited within the reception window of the radio base station is determined (Step S1306).

When the uplink reception timing of the mobile station in communications in the cell is limited within the reception window of the radio base station (Step S1306: YES), it is determined that the uplink synchronization is determined to be established between the radio base station and the mobile station (Step S1308).

On the other hand, when the uplink reception timing of the mobile station in communications in the cell is not limited within the reception window of the radio base station (Step 1306: NO), an out of synchronization state A is determined in uplink between the radio base station and the mobile station (Step S1310). Then, this mobile station is not subject to the scheduling (the uplink shared channel is not assigned) (Step S1312).

In the determination in accordance with the SIR of the uplink reference signal at Step 1302, a determination result about whether an elapsed time from the timing at which the UL transmission timing control signal had been transmitted last time exceeds a predetermined timer may be taken into consideration.

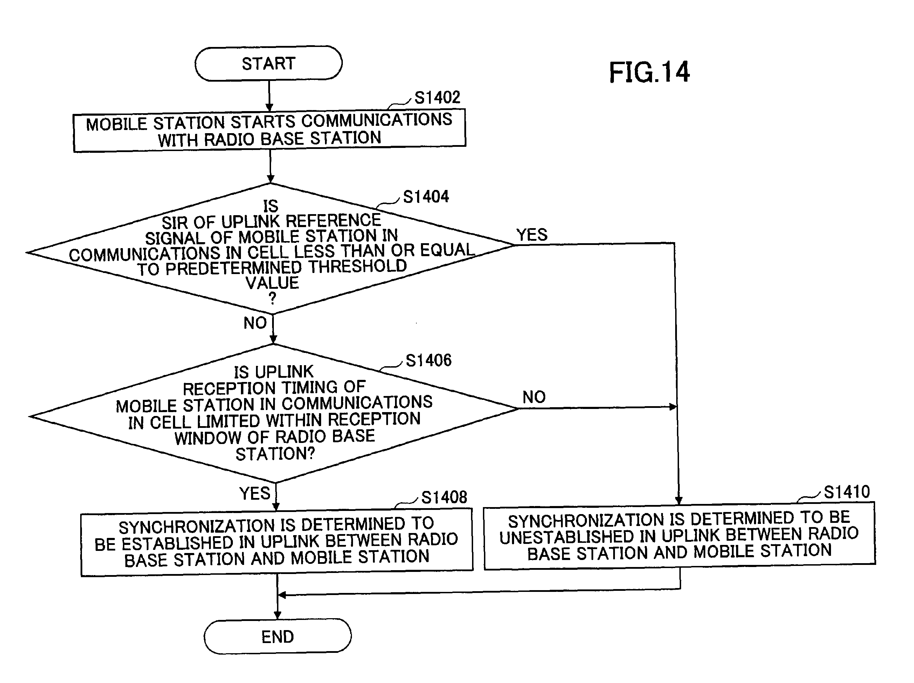

Next, a determination processing for establishing synchronization at the time when communications are started in the base station apparatus 200 according to this example is explained with reference to Fig. 14.

The mobile station starts communications with the radio base station (Step S1402).

Next, whether the SIR of the uplink reference signal of the mobile station in communications in the cell is less than or equal to the predetermined threshold value is determined (Step S1404).

When the SIR of the uplink reference signal of the mobile station in communications in the cell is not less than or equal to the predetermined threshold value (Step S1404: NO), whether the uplink reception timing of the mobile station in communications in the cell is limited within the reception window of the radio base station is determined (Step S1406).

When the uplink reception timing of the mobile station in communications in the cell is limited within the reception window of the radio base station (Step S1406: YES), it is determined that the uplink synchronization has been established between the radio base station and the mobile station (Step S1408).

On the other hand, when the SIR of the uplink reference signal of the mobile station in communications in the cell is less than or equal to the predetermined threshold value (Step S1404: YES) or when the uplink reception timing of the mobile station in communications in the cell is not limited within the reception window of the radio base station (Step S1406: NO), it is determined that the uplink between the radio base station and the mobile station is out of synchronization (Step S1410).

According to the example of the present invention, out of synchronization is determined for the mobile station whose uplink signal is outside the reception window of the base station apparatus, and the uplink shared channel is not assigned to the mobile station for which out of synchronization is determined. Therefore, the uplink orthogonality is maintained and the uplink communications quality and communications capacity can be improved.

The above example is explained taking an example of the system where Evolved UTRA and UTRAN (another name: Long Term Evolution, or Super 3G) is applied. However, the base station apparatus and the communications control method according to an embodiment of the present invention are applicable to other systems employing the Single-Carrier Frequency Division Multiple Access in uplink and Orthogonal Frequency Division Multiple Access in downlink.

While the present invention is described through the above examples, it should be understood that description and drawings as parts of this disclosure do not limit the present invention. Various alternative embodiments, examples and operational technologies are apparent to a person having ordinary skill in the art from the disclosure

In other words, the present invention includes various other embodiments that are not described here. Therefore, the technical scope of the present invention should be understood by matters necessary to specify the invention according to the Claims in conjunction with the above examples.

While the present invention has been described separately as individual examples for simplicity of explanation, the individualities are not essential to the present invention, and one or more of the examples may be practiced when necessary. In addition, while the present invention has been described by using specific values in order to facilitate the understanding of the present invention, those values are merely examples and various values may be used unless otherwise noted.

While the present invention has been explained with reference to specific examples, each example is merely illustrative and a person having ordinary skill will understand various alterations, modifications, substitutions, replacements and the like. While the apparatuses according to the examples of the present invention are explained in the form of the operational block diagrams for simplicity of explanation, such apparatuses may be realized by hardware, software or a combination thereof. The present invention is not limited to the above examples, but includes various alterations, modifications, substitutions, replacements and the like without departing the scope of the present invention.

This international application claims the benefit of the priority date of Japanese Patent Application No. 2007-001860 filed on January 9, 2007, the entire content of which is herein incorporated hereby by reference.

### INDUSTRIAL APPLICABILITY

A mobile communications system, a base station, a mobile station, and a communications control method according to embodiments of the present invention are applicable to a radio communications system.

## Claims

1. A base station apparatus for carrying out communications with a mobile station, wherein the mobile station transmits an uplink signal by Single-Carrier Frequency Division Multiple Access or Orthogonal Frequency Division Multiple Access, the base station apparatus being **characterized by**:
an out-of-synchronization determining section that determines uplink out of synchronization with the mobile station in accordance with a reception timing of the uplink signal.

2. The base station apparatus as claimed in claim 1, **characterized in that** the out-of-synchronization determining section determines the uplink out of synchronization with the mobile station in accordance with at least one of a reception quality of an uplink pilot signal, elapsed time since a timing at which a UL transmission timing control signal is transmitted last time, and a data error rate of the uplink signal, in addition to the reception timing of the uplink signal.

3. The base station apparatus as claimed in claim 2, **characterized in that** the out-of-synchronization determining section determines that the uplink with the mobile station is out of synchronization in accordance a reception quality of CQI in place of or in addition to the reception quality of the uplink pilot signal.

4. The base station apparatus as claimed in claim 1, **characterized in that** the out of synchronization deteremining section determines that the uplink with the mobile station is out of synchronization when a reception timing of the uplink signal is outside of a predetermined reception window.

5. The base station apparatus as claimed in claim 4, **characterized in that** the reception window is determined by a Cyclic Prefix length and a Fast Fourier Transform timing in the base station apparatus.

6. The base station apparatus as claimed in claim 4, **characterized in that** the reception timing of the uplink signal is estimated in accordance with at least one of a sounding reference signal, a demodulation reference signal, and a channel quality indicator.

7. The base station apparatus as claimed in claim 4, **characterized in that** the out-of-synchronization determining section determines that the uplink with the mobile station is out of synchronization when a state where the reception timing of the uplink signal is outside of the predetermined reception window continues for more than or equal to a predetermined time period.

8. A base station apparatus that carries out communications with plural mobile stations, wherein the mobile stations transmit an uplink signal by Single-Carrier Frequency Division Multiple Access or Orthogonal Frequency Division Multiple Access, the base station apparatus being **characterized in that** an uplink resource or a downlink resource is not assigned to a mobile station for which an uplink is detected to be out of synchronization.

9. A base station apparatus that carries out communications with plural mobile stations, wherein the mobile stations transmit an uplink signal by Single-Carrier Frequency Division Multiple Access or Orthogonal Frequency Division Multiple Access, the base station apparatus being **characterized in that** communication with a mobile station for which an uplink is detected to be out of synchronization is disconnected.

10. A base station apparatus that carries out communications with plural mobile stations, wherein the mobile stations transmit an uplink signal by Single-Carrier Frequency Division Multiple Access or Orthogonal Frequency Division Multiple Access, the base station apparatus being **characterized in that** a message for directing reestablishment of synchronization using a random access channel is provided for a mobile station whose uplink is detected to be out of synchronization.

11. The base station apparatus as claimed in claim 10, **characterized in that** the message for directing reestablishment of synchronization using the random access channel is provided using an RRC signaling.

12. A base station apparatus for carrying out communications with a mobile station, wherein the mobile station transmits an uplink signal by Single-Carrier Frequency Division Multiple Access or Orthogonal Frequency Division Multiple Access at the time of starting the communications, the base station apparatus being **characterized by**:
an synchronization establishment determining section for determining plural synchronization states of uplink synchronization with the mobile station in accordance with a reception timing of the uplink signal, a reception quality of an uplink pilot signal, and an uplink data error rate.

13. A base station apparatus for carrying out communications with a mobile station, wherein the mobile station transmits an uplink signal by Single-Carrier Frequency Division Multiple Access or Orthogonal Frequency Division Multiple Access at the time of starting the communications, the base station apparatus being **characterized by**:
a synchronization establishment determining section for determining that uplink synchronization with the mobile station is established in accordance with at least one of a reception timing of the uplink signal and a reception quality of an uplink pilot signal.

14. The base station apparatus as claimed in any one of claims 1 through 13, **characterized in that** communications using LTE are carried out with the mobile station.

15. A communications method in a base station apparatus for carrying out communications with a mobile station, the method being **characterized by** steps of:
receiving an uplink signal transmitted from the mobile station by Single-Carrier Frequency Division Multiple Access or Orthogonal Frequency Division Multiple Access; and
determining that an uplink with the mobile station is out of synchronization in accordance with a reception timing of the uplink signal.
